Europäisches Patentamt

European Patent Office

Office européen des brevets

(19)

(11) Veröffentlichungsnummer: **0 128 293**
**B1**

(12) **EUROPÄISCHE PATENTSCHRIFT**

(45) Veröffentlichungstag der Patentschrift:
01.07.87

(51) Int. Cl.⁴: **B 26 B 19/28,** F 16 H 21/18

(21) Anmeldenummer: **84103744.3**

(22) Anmeldetag: **05.04.84**

(54) **Schwingbrücke.**

(30) Priorität: **29.04.83 DE 3315642**

(43) Veröffentlichungstag der Anmeldung:
**19.12.84 Patentblatt 84/51**

(45) Bekanntmachung des Hinweises auf die Patenterteilung:
**01.07.87 Patentblatt 87/27**

(84) Benannte Vertragsstaaten:
**AT CH FR GB LI NL**

(56) Entgegenhaltungen:
**FR-A-2 451 251**
**US-A-4 065 977**

**JP-Y2-58-5585 (Übersetzung des Namens des Anmelders nicht vorhanden)**

(73) Patentinhaber: **Braun Aktiengesellschaft, Rüsselsheimer Strasse 22, D-6000 Frankfurt/Main (DE)**

(72) Erfinder: **Dürr, Helmut, Grosse- Seestrasse 40, D-6000 Frankfurt/Main 90 (DE)**

(74) Vertreter: **Einsele, Rolf, Braun Aktiengesellschaft Postfach 1120 Frankfurter Strasse 145, D-6242 Kronberg Taunus (DE)**

EP 0 128 293 B1

## Beschreibung

Die Erfindung bezieht sich auf eine Schwingbrücke zur Umwandlung der Drehbewegung eines von einer Motorwelle angetriebenen Exzenters in eine hin- und hergehende Bewegung eines Abtriebs für ein Werkzeug bei elektrisch angetriebenen Kleingeräten, bestehend aus einem den Abtrieb aufweisenden, zwischen zwei streifenartigen Filmscharnieren vorgesehenen Brückenjoch, und einem mit einem Exzenter außerhalb des Bereichs zwischen den Filmscharnieren gekoppelten, parallel zum Brückenjoch verlaufenden Pleuel.

Schwingbrücken sind aus der DE-A-2 117 319 und der DE-B-2 749 936 bekannt und werden vorwiegend bei Trockenrasierapparaten angewendet; sie sind aber auch für elektrische Massagegeräte, Zahnbürsten und Feilen geeignet.

Beim Entwurf der Schwingbrücken im Hinblick auf die geforderte Schwingungsamplitude sind auch für den Pleuel bestimmte Bemessungsregeln einzuhalten, um die notwendige Steifheit in Schwingungsrichtung und Flexibilität quer dazu zu gewährleisten. Versucht man diese Regeln einzuhalten, gelangt man aber häufig zu Pleuelabmessungen, die nur bei relativ großen Spannweiten der Schwingbrücke zwischen den als Stützglieder dienenden Filmscharnieren geeignet sind oder aber zu Faltkonstruktionen (DE-B-2 749 936), die jedoch größeren Raumbedarf in der Breite haben aber auch zu frequenzabhängigen Instabilitäten neigen, die nur mit größerem Aufwand und engen Toleranzen beherrschbar sind. Außerdem kann die Anordnung des Motors im Gehäuse, die vom Ankopplungspunkt seines Exzenters mit dem Pleuelkopf abhängt, den Einbau und die Anordnung der übrigen notwendigen elekrischen Bauelemente im Gehäuse erschweren.

Aus dem japanischen Gebrauchsmuster JP-Y2-58-5585 ist eine Schwingbrücke der eingangs erwähnten Gattung bekannt, bei der das Brückenjoch aus einer mit einem Abtrieb versehenen Platte und daran angeformten streifenartigen Filmscharnieren sowie einem an der Platte angeformten Pleuel besteht. Aufgrund der unmittelbaren Anformung der Filmscharniere und des Pleuel an der Platte weist das derart gebildete Brückenjoch ein instabiles Verhalten auf und neigt zu unkontollierten Bewegungen, die der nutzbaren linearen Arbeitsbewegung verloren gehen.

Die Erfindung hat daher die Aufgabe, eine Schwingbrücke dieser Gattung zu schaffen, bei der hinsichtlich der vorstehend genannten Forderungen größere Freizügigkeit in der Anordnung und den Abmessungen aller genannten Bauteile gewährleistet ist und mittels der die Drehbewegung eines von einer Motorwelle angetriebenen Exzenters in optimaler Weise in eine linear hin- und hergehende Bewegung umgesetzt wird.

Die Erfindung löst diese Aufgabe in überraschend einfacher Weise mit den im Kennzeichen des Hauptanspruches angegebenen Mitteln.

Um die Steifheit des schwingenden Brückenjochs zu erhöhen sind nach einer vorteilhaften Ausführungsform der Erfindung beide Wände im Bereich ihrer freien Enden mittels Leisten verbunden.

Diese Steifheit kann nach der Erfindung noch dadurch erhöht werden, daß das Brückenjoch mit mindestens einer der Leisten durch einen Steg verbunden ist, an dem, falls gewünscht, an der Außenseite ein weiterer Abtrieb vorgesehen sein kann. Zweckmäßigerweise ist die Schwingbrücke über die Befestigung der Enden der streifenartigen Filmscharniere am Gehäuse hängend gehalten, wodurch der auf den Abtrieb über angeschlossene Werkzeuge ausgeübte Druck in vorteilhafter Weise von den streifenartigen Filmscharnieren ohne Deformation derselben aufgefangen wird.

In der nachstehend beschriebenen Zeichnung ist ein Ausführungsbeispiel der Erfindung dargestellt.

Es zeigen

Fig. 1 die Seitenansicht einer Schwingbrücke mit Motor, eingebaut in das Gehäuse eines elektrischen Kleingerätes, in schematischer Darstellung,

Fig. 2 die Ansicht der Schwingbrücke in Richtung des Pfeiles A nach Fig. 1,

Fig. 3 die Ansicht der Schwingbrücke in Richtung des Pfeiles nach Fig. 1.

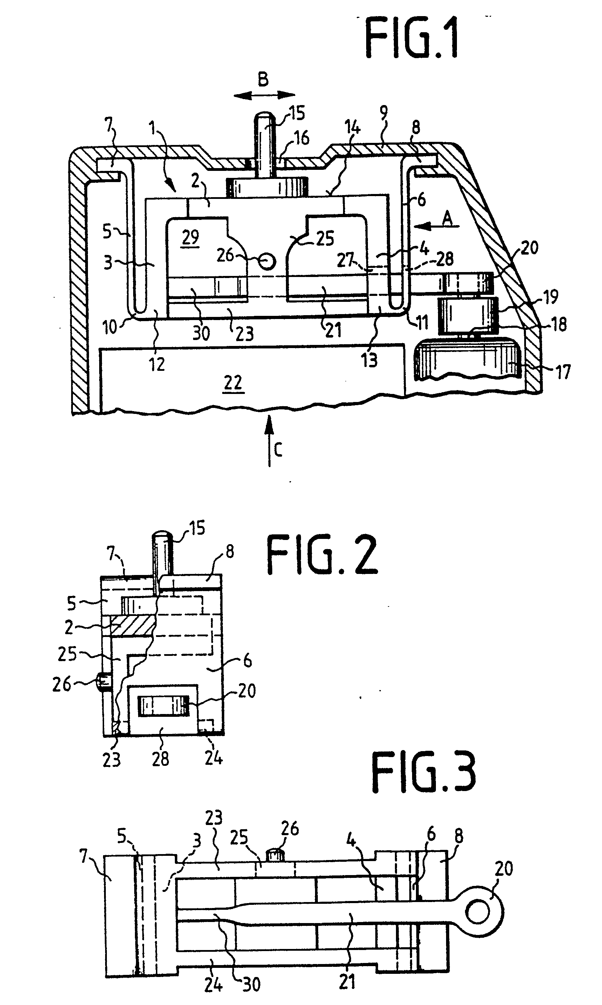

Die in Fig. 1 dargestellte Ausführungsform einer Schwingbrücke 1 besteht im wesentlichen aus einem Brückenjoch 2 an dem zwei etwa rechtwinklig abstehende Wände 3 und 4 angeformt sind und zwei parallel zu den Wänden 3 und 4 verlaufenden streifenartigen Filmscharnieren 5 und 6. Die Filmscharniere 5 und 6 sind mit ihrem einen Ende 7 und 8 im Gehäuse 9 des Kleingerätes befestigt, während die freien Enden 10 und 11 in die freien Enden 12 und 13 der Wände 3 und 4 übergehen. Das Brückenjoch 2 der Schwingbrücke 1, die in Richtung des Doppelpfeiles B hin- und herschwingt, ist danach im Gehäuse 9 hängend gehaltert.

Auf der Oberseite 14 des Brückenjochs 2 der Schwingbrücke 1 ist ein Abtrieb 15 in Form eines Bolzens angebracht, der durch eine Ausnehmung 16 im Gehäuse 9 des elektrischen Kleingerätes ragt, um die lineare Schwingung der Schwingbrücke auf mit dem Abtrieb 15 verbundene Werkzeuge, wie z. B. den Messerblock eines Rasierapparates, zu übertragen.

Seitlich neben der Schwingbrücke 1 ist ein Elektromotor 17 mit senkrechter Welle 18 im Gehäuse 9 angeordnet, dessen Exzenter 19 mit dem Pleuelkopf 20 eines Pleuels 21 gekoppelt ist. Durch die seitliche Anordnung des Motors 17 und der Schwingbrücke 1 nebeneinander ist hinreichend Raum geschaffen, um elektrische Anschlußelemente sowie Primär- oder Sekundärzellen unterzubringen, diese Teile sind schematisch mit einem Rechteckausschnitt 22 angedeutet.

Die Schwingbrücke 1 kann in bekannter Weise einstückig aus Kunststoff hergestellt sein, wobei das Brückenjoch 2 und die Wände 3 und 4 eine starre Einheit bilden, die weitgehend frei von Verformungen bleibt.

An der der Oberseite 14 des Brückenjochs 2 entgegengesetzter Seite sind in Schwingrichtung B zwei Leisten 23 und 24 vorgesehen, welche die freien Enden 12 und 13 der Wände 3 und 4 miteinander verbinden. Das Brückenjoch 2 bildet danach zusammen mit den Wänden 3 und 4 und den Leisten 23 und 24 einen in sich steifen Käfig, der unter Belastung keinerlei Verformungen zuläßt.

Parallel zu den Wänden 3 und 4 ist ein Steg 25 vorgesehen, der die Leiste 23 und/oder 24 mit dem Brückenjoch 2 verbindet. An dem Steg 25 ist ein weiterer Abtrieb 26 in Form eines Bolzens angeformt, der zum Antrieb eines weiteren Werkzeuges des elektrischen Kleingerätes, z. B. einer Langhaarschneideeinrichtung bei einem Rasierapparat, dient. Der oder die Stege 25 tragen ebenfalls einen zusätzlichen Anteil zur Steifigkeit des durch das Brückenjoch 2, den Wänden 3 und 4 und den Leisten 23 und 24 gebildeten Käfigs bei.

Zum Antrieb der Schwingbrücke 1 dient der Pleuel 21, der an einer starren Wand 3 im Bereich des freien Endes 12 dieser Wand schwenkbar angelenkt und durch die Öffnung 27 in der Wand 4 sowie durch die Öffnung 28 in dem Filmscharnier 6 hindurchgeführt ist, so das der Pleuelkopf 20 des Pleuels 21 aus dem durch die Schwingbrücke eingenommenen Raum 29 im Gehäuse 9 herausragt. Der Pleuelkopf 20 ist mit dem auf der Welle 18 des Motors 17 angebrachten Exzenter 19 gekoppelt. Der Pleuel 21 weist im Bereich der Verbindungsstelle 30 mit der Wand 3 einen verringerten Querschnitt auf, um seine Elastizität quer zur Schwingungsrichtung, Pfeil B, zu gewährleisten.

Fig. 2 zeigt eine Seitenansicht der Schwingbrücke 1 nach Fig. 1 in Pfeilrichtung A mit einer teilweis durchbrochenen Wand des Filmscharniers 6 sowie einen Teilschnitt durch das Brückenjoch 2. Die Schwingbrücke 1 weist zwei Leisten 23 und 24 auf. An der Leiste 23 ist ein Steg 25 mit einem Abtrieb 26 angeformt. In der Wandung des Filmscharniers 6 ist in dem, dem Ende 8 entgegensetzten Ende des Filmscharniers eine rechteckförmige Öffnung 28 vorgesehen, durch die der Pleuel 21 mit dem Pleuelkopf 21 hindurchgeführt ist.

Fig. 3 zeigt eine Ansicht der Schwingbrücke nach Fig. 1 in Pfeilrichtung C. Bei dieser Ausführungsform der Schwingbrücke 1 ist diese im Bereich der Leisten 23 und 24 und der Wände 3 und 4 offen, wodurch der Pleuel 21 mit seinem verringerten Querschnitt im Bereich der Verbindungsstelle 30 mit der Wand 3 sichtbar ist. Nach einer abgewandelten Ausführungsform der Schwingbrücke 1, die hier nicht dargestellt ist, können die Leisten 23 und 24 und die Wände 3 und 4 mittels einer dünnen Bodenplatte verbunden sein.

**Patentansprüche**

1. Schwingbrücke (1) zur Umwandlung der Drehbewegung eines von einer Motorwelle (18) angetriebenen Exzenters (19) in eine hin- und hergehende Bewegung eines Abtriebs (15) für ein Werkzeug bei elektrisch angetriebenen Kleingeräten, bestehend aus einem den Abtrieb (15) aufweisenden, zwischen zwei streifenartigen Filmscharnieren (5, 6) vorgesehenen Brückenjoch (2), und einem mit dem Exzenter (19) außerhalb des Bereichs zwischen den Filmscharnieren gekoppelten, parallel zum Brückenjoch (2) verlaufenden Pleuel (21), dadurch gekennzeichnet, daß an den Enden des Brückenjochs (2) zwei in etwa rechtwinklig abstehende Wände (3 und 4) vorgesehen sind, die mit dem Brückenjoch eine starre Einheit bilden, daß die dem Brückenjoch abgewandten Enden (12, 13) der Wände (3, 4) in Enden (10, 11) der parallel zu den Wänden (3, 4) verlaufenden streifenartigen Filmscharniere (5, 6) übergehen, daß eine dieser Wände (3 oder 4) sowie das dieser Wand zugeordnete Filmscharnier (5, 6) jeweils mit einer auf deren Mittenachsen vorgesehenen Öffnung (27, 28) versehen ist und daß der Pleuel (21) an der den jeweiligen Öffnungen (27, 28) gegenüberliegenden Wand (3 oder 4) im Bereich von deren freien Ende, mittig zum Kraftabtrieb (15) verlaufend, mittels eines Filmscharniers (30) angeformt ist.

2. Schwingbrücke nach Anspruch 1, dadurch gekennzeichnet, daß beide Wände (3, 4) im Bereich ihrer freien Enden (12, 13) mittels Leisten (23, 24) verbunden sind.

3. Schwingbrücke nach Anspruch 2, dadurch gekennzeichnet, daß das Brückenjoch (2) mit mindestens einer der Leisten (23, 24) durch einen Steg (25) verbunden ist.

4. Schwingbrücke nach Anspruch 3, dadurch gekennzeichnet, daß an der Außenseite des Steges (25) ein weiterer Antrieb (26) vorgesehen ist.

5. Schwingbrücke nach einem der vorhergehenden Ansprüche dadurch gekennzeichnet, daß die Schwingbrücke (1) über die Befestigung der Enden (7, 8) der streifenartigen Filmscharniere (5, 6) am Gehäuse (9) hängend gehalten ist.

**Claims**

1. An oscillating bridge (1) for converting the rotary motion of an eccentric (19) driven by a motor shaft (18) into a reciprocating motion of a secondary drive (15) for a tool in small electrically driven appliances, consisting of a bridge yoke (2) comprising the secondary drive (15) and provided between two strip-like film hinges (5, 6), and of a connecting rod (21) coupled to the eccentric (19) outside the region between the film hinges and extending parallel to the bridge yoke (2), characterised in that provided at the ends of the bridge yoke (2) are two walls (3 and 4) which project substantially at right angles and which form a rigid unit with the bridge yoke, that the ends (12, 13), remote from the bridge yoke, of the walls (3, 4) change over into ends (10, 11) of the strip-like film hinges (5, 6) extending parallel to the walls (3, 4), that one of these walls (3 or 4) as well as the film hinge (5, 6) associated with this wall are each provided with an opening (27, 28) provided in their centre axes and that the connecting rod (21) is formed on the wall (3 or 4) situated opposite to the particular openings (27, 28), in the region of its free end, extending centrally with respect to the power take-off (15), by means of a film hinge (30).

2. An oscillating bridge according to claim 1, characterised in that the two walls (3, 4) are connected by means of strips (23, 24) in the region of their free ends (12, 13).

3. An oscillating bridge according to claim 2, characterised in that the bridge yoke (2) is connected to at least one of the strips (23, 24) by a web (25).

4. An oscillating bridge according to claim 3, characterised in that a further drive (26) is provided at the outside of the web (25).

5. An oscillating bridge according to one of the preceding claims, characterised in that the oscillating bridge (1) is held suspended through the securing of the ends (7, 8) of the strip-like film hinges (5, 6) to the housing (9).

**Revendications**

1. Pont vibrant (1) pour convertir le mouvement de rotation d'un excentrique entraîné par l'arbre (18) d'un moteur en un mouvement de va-et-vient d'un organe de sortie de mouvement (15) pour un outil, pour petits appareils entraînés électriquement, ce pont étant constitué par une partie travée (2) prévue entre deux charnières à film (5, 6) du genre bande et dotée de l'organe de sortie de mouvement (15), et par une bielle (21) couplée à l'excentrique (19), à l'extérieur de la région comprise entre les charnières à film, cette bielle (21) étant parallèle à la partie travée (2), caractérisé par le fait qu'il est prévu, aux extrémités de la partie travée (2), deux parois (3 et 4) formant saillie sensiblement à angle droit et constituant une unité rigide avec la partie travée, par le fait que celles des extrémités (12, 13) des parois (3, 4) qui sont éloignées de la partie travée se raccordent à des extrémités (10, 11) de charnières à film (5, 6) du genre bande qui sont parallèles aux parois (3, 4), par le fait que l'une de ces parois (3 ou 4) et la charnière à film (5, 6) associée à cette paroi sont pourvues chacune d'une ouverture (27, 28) disposée sur son axe médian, et par le fait qu'à l'endroit de la paroi (3, 4) située à l'opposé des ouvertures (27, 28), dans la région de l'extrémité libre de cette paroi, la bielle à tracé centré par rapport à l'organe de sortie de mouvement (15) est formée au moyen d'une charnière à film (30).

2. Pont vibrant selon revendication 1, caractérisé par le fait que les deux parois (3, 4) sont reliées au moyen de barrettes (23, 24), dans la région de leurs extrémités libres (12, 13).

3. Pont vibrant selon revendication 2, caractérisé par le fait que la partie travée (2) est reliée par une âme (25) à au moins l'une des barrettes (23, 24).

4. Pont vibrant selon revendication 3, caractérisé par le fait qu'un autre organe de sortie de mouvement (26) est prévu sur le côté extérieur de l'âme (25).

5. Pont vibrant selon l'une quelconque des revendications précédentes, caractérisé par le fait qu'il est monté a suspension sur le boîtier (9), par fixation des extrémités (7, 8) des charnières à film (5, 6) du genre bande.

# FIG.1

# FIG.2

# FIG.3